# EUROPÄISCHE PATENTSCHRIFT

(11) **EP 1 574 457 B1**
(45) Veröffentlichungstag und Bekanntmachung des Hinweises auf die Patenterteilung: **02.11.2006**
(21) Anmeldenummer: 05002559.2
(22) Anmeldetag: 08.02.2005
(51) Int. Cl.: B65G 15/48

(54) **Bandförderer**
Belt conveyor
Convoyeur à bande

(30) Priorität: 13.03.2004 DE 102004012444
(43) Veröffentlichungstag der Anmeldung: 14.09.2005
(73) Patentinhaber: Freiberger Lebensmittel GmbH & Co. Produktions- und Vertriebs KG, 13439 Berlin (DE)
(72) Erfinder: Dolski, Eberhard, 14476 Seeburg (DE)
(74) Vertreter: Dimmerling, Heinz

(56) Entgegenhaltungen:
- EP-A- 0 126 945
- EP-A- 1 273 653
- DE-A1- 19 618 506

## Beschreibung

Die Erfindung betrifft einen Bandförderer mit einem als Endlosband ausgebildeten Gurt, welcher um eine in Förderrichtung des Bandförderers vorne angeordneten vorderen Welle und um eine in Laufrichtung des Bandförderers hinten angeordnete hintere Welle umgelenkt wird, wobei der Antrieb für den Gurt mittels einer vom Gurt teilweise umschlungenen Welle vorgenommen wird und der Durchmesser wenigstens einer der Wellen zwischen zwanzig und hundertzwanzig Millimeter liegt.

Ein derartiger Bandförderer ist im Stand der Technik hinlänglich bekannt und wird insbesondere im Bereich der Lebensmittelproduktion wie beispielsweise bei der Produktion von Pizzen oder dergleichen verwendet. Es ist daher erforderlich, dass der Bandförderer, insbesondere der Gurt, sehr leicht und gründlich gereinigt und desinfiziert werden kann.

Der Gurt bei bisher bekannten gattungsgemäßen Bandförderernm besteht aus Kunststoff oder ist mit Kunststoff beschichtet. Da die Bandförderer im Abstand von ein paar Stunden gereinigt und desinfiziert werden müssen, beginnen die Oberflächen der bekannten Gurte nach mehrwöchigen Laufzeiten porös beziehungsweise rissig zu werden. Hierdurch wird die Keimbildung innerhalb des Gurtes ermöglicht und durch das Desinfektionsmittel immer weniger neutralisiert. Als Folge hiervon muss der Gurt nach relativ kurzer Zeit erneuert werden.

Das Auswechseln eines Gurtes ist sehr aufwendig, da in der Regel die Enden eines Gurtbandes zur Bildung eines den Gurt bildenden Endlosbandes innerhalb des Bandförderers miteinander verschweißt werden müssen. Dies dauert je nach Materialstärke und -breite des Bandes zwei bis vier Stunden. Dies ist sehr nachteilig, da der Gurtwechsel zwangsläufig mit einem Produktionsstillstand verbunden ist.

Es sei auch darauf hingewiesen, daß Förderbänder aus Metall und einer Dicke kleiner 0,6 Millimeter ansich schon bekannt sind, siehe z.B. EP 0 126 945.

Es ist Aufgabe der Erfindung, einen eingangs genannten Bandförderer derart auszubilden, dass sich seine Standzeit erhöht und ein Gurtwechsel einfacher und schneller durchführbar ist.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung ist ein Bandförderer, mit einem als Endlosband aus Edelstahl ausgebildeten Gurt, welcher um eine in Förderrichtung des Bandförderers vorne angeordnete vordere Welle und um eine in Laufrichtung des Bandförderers hinten angeordnete hintere Welle umgelenkt wird, wobei der Antrieb für den Gurt mittels einer vom Gurt teilweise umschlungenen Welle vorgenommen wird, und der Durchmesser wenigstens eine der Wellen zwischen zwanzig und hundertzwanzig Millimeter liegt und der Gurt als Metallband ausgebildet ist, dessen Dicke kleiner als 0,6 Millimeter ist.

Dadurch, dass der Gurt als Edelstahlband ausgebildet ist, dessen Dicke kleiner als 0,6 Millimeter ist, lässt sich der Gurt sehr leicht und gründlich reinigen. Eine mikrobiologische Gefährdung besteht nicht mehr, da die Oberfläche des Gurtes nicht porös oder rissig werden kann.

Des Weiteren besteht dadurch, dass der Gurt als Edelstahlband ausgebildet ist, nicht mehr die Gefahr, dass der Gurt bei einer mechanischen Belastung wie beispielsweise beim Ausstechen von Teig beschädigt wird.

Sehr vorteilhaft ist eine Ausführungsform der Erfindung, bei der der Gurt aus einem Band besteht, dessen Enden überlappend miteinander verbunden sind. Dies lässt sich insbesondere durch die geringe Dicke des Edelstahlbandes sehr gut erreichen. Des Weiteren hat die geringe Dicke des Bandes den Vorteil, dass sich die Enden des Bandes recht einfach beispielsweise mittels Punktschweißung miteinander verbinden lassen. Hierdurch verringert sich die Zeit, die zum Auswechseln eines Gurtes benötigt wird, erheblich. Statt der bisher benötigten Zeit von zwei bis drei Stunden lassen sich die Enden des erfindungsgemäß ausgebildeten Gurtes in weniger als dreißig Minuten miteinander verbinden.

Als sehr vorteilhaft hat sich eine Ausführungsform der Erfindung herausgestellt, bei der die Verbindungslinie der Enden des Gurtes mit der Längsachse des Gurtes einen Winkel bildet, der kleiner als 90 Grad, vorzugsweise kleiner als 45 Grad, insbesondere kleiner als 35 Grad ist. Als sehr gut hat sich ein Wert von 30 Grad erwiesen. Hierdurch wird erreicht, dass die Belastung der Verbindungsstelle insbesondere bei der Umlenkung um Wellen mit einem sehr kleinen Durchmesser sehr gering ist. Dies wirkt sich sehr vorteilhaft auf die Standzeit des Gurtes und damit auf die Zuverlässigkeit des Bandförderers aus. Der schräge Verlauf der Verbindungsstelle hat sich insbesondere in Verbindung mit der punktgeschweißten Verbindung der Bandenden als sehr vorteilhaft erwiesen.

Bei einer weiteren besonderen Ausführungsform der Erfindung ist vorgesehen, dass der Antrieb des Gurts mittels der hinteren Welle erfolgt. Es hat sich herausgestellt, dass hierdurch der Gurt in seitlicher Richtung nur einen sehr geringen Verlauf hat. Es kann daher insbesondere bei einem erfindungsgemäß ausgebildeten Metallband auf eine seitliche Gurtsteuerung verzichtet werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine schematische Darstellung eines erfindungsgemäßen Bandförderers von der Seite und
- Figur 2: eine Verbindungsstelle eines erfindungsgemäßen Gurtes.

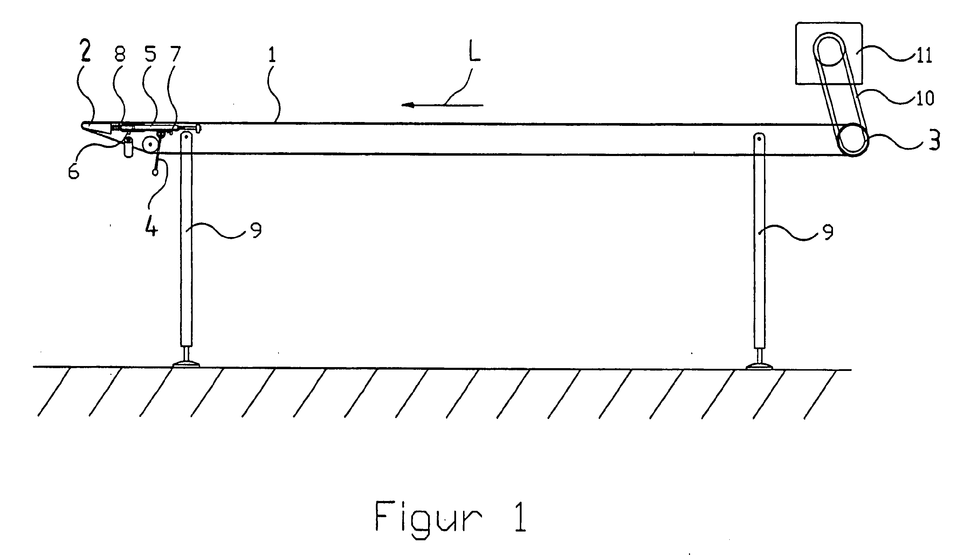

Wie Figur 1 entnommen werden kann, weist ein Bandförderer einen Gurt 1 auf, welcher um eine in Laufrichtung L des Transportbandes vordere Welle 2 und um eine in Laufrichtung des Transportbandes hinten angeordnete hintere Welle 3 umgelenkt wird. Die hintere Welle 3 ist über eine Kette 10 mit einem Elektromotor 11 verbunden.

Der Bandförderer ist auf Stützfüßen 9 angeordnet. Dadurch, dass der Elektromotor 11 die hintere Welle 3 antreibt und oberhalb der hinteren Welle 3 angeordnet ist, kann der Bereich unterhalb des Gurtes 1 frei bleiben, wodurch sich eine sehr große Beinfreiheit ergibt.

Die vordere Welle 2 ist in einer Spannvorrichtung angeordnet, welche über eine Druckfeder 8 mit einem als Zahnstange ausgebildeten Schieber 5 verbunden ist. Die Zahnstange 5 lässt sich auf herkömmliche Weise mittels eines Hebels 4 axial verschieben. Der Weg der Zahnstange 5 ist durch einen Anschlag 6 in Richtung zur vorderen Welle 2 sowie durch einen weiteren Anschlag 7 in Richtung zur hinteren Welle 3 begrenzt. Hierdurch wird einerseits eine Überdehnung des Gurtes 1 verhindert. Andererseits wird hierdurch verhindert, dass der Gurt 1 beliebig entspannt werden kann, wodurch seine Durchhängung zu groß werden könnte. Der Gurt 1 kann nur soweit entspannt werden, wie es zur Reinigung der Innenseite erforderlich ist, wobei darauf zu achten ist, dass der Gurt 1 bei der Reinigung noch seine Transportbewegung durchführt.

Durch die Druckfeder 8 wird die durch die Zahnstange 5 auf die Spannvorrichtung beziehungsweise auf die vordere Welle 2 und damit auf den Gurt 1 ausgeübte Kraft abgefedert. Die Abfederung wirkt sich sehr vorteilhaft auf die Spannung des Gurtes 1 aus. Insbesondere können durch die Druckfeder 8 Beschädigungen des Gurtes 1 durch unkontrollierte Spannkräfte vermieden werden.

Der Gurt 1 besteht aus einem Metallband aus Edelstahl. Seine Dicke beträgt etwa 0,1 Millimeter. Seine Enden sind überlappend mittels Punktschweißung miteinander verbunden. Die Breite der Überlappung 12 beträgt etwa 10 Millimeter bei zwei parallelen Schweißpunktreihen. Bei nur einer Schweißpunktreihe kann die Überlappung auf fünf Millimeter reduziert werden.

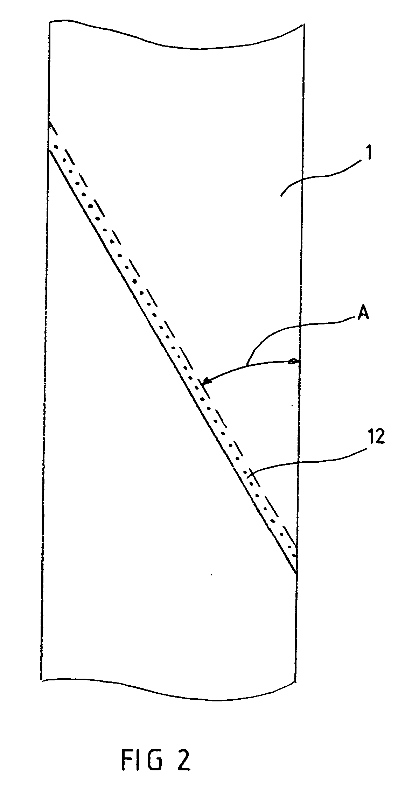

Wie Figur 2 entnommen werden kann, weist die Verbindungslinie der Enden des Gurtes 1 mit der Längsachse des Gurtes 1 einen Winkel A von etwa dreißig Grad auf.

## Patentansprüche

1. Bandförderer, mit einem als Endlosband ausgebildeten Gurt (1), welcher als Edelstahlband ausgebildet ist und um eine in Förderrichtung des Bandförderers vorne angeordnete vordere Welle (2) und um eine in Laufrichtung des Bandförderers hinten angeordnete hintere Welle (3) umgelenkt wird, wobei der Antrieb für den Gurt (1) mittels einer vom Gurt (1) teilweise umschlungenen Welle (3) vorgenommen wird, und der Durchmesser wenigstens einer der Wellen (2, 3) zwischen zwanzig und hundertzwanzig Millimeter liegt,
wobei
die Dicke des Gurtes (1) kleiner als 0,6 Millimeter ist.

2. Bandförderer nach Anspruch 1,
**dadurch gekennzeichnet,**
**daß** der Gurt (1) aus einem Metallband besteht, dessen Enden überlappend miteinander verbunden sind.

3. Bandförderer nach Anspruch 2,
**dadurch gekennzeichnet,**
**daß** die Enden durch Punktschweißung miteinander verbunden sind.

4. Bandförderer nach Anspruch 2 oder 3,
**dadurch gekennzeichnet,**
**daß** die Verbindungslinie der Enden des Gurtes (1) mit der Längsachse des Gurtes (1) einen Winkel bildet, der kleiner als 90 Grad, vorzugsweise kleiner als 45 Grad, insbesondere kleiner als 35 Grad ist.

5. Bandförderer nach einem der Ansprüche 1 bis 4,
**dadurch gekennzeichnet,**
**daß** der Antrieb des Gurts mittels der hinteren Welle (3) erfolgt.

## Claims

1. Belt conveyor, with a belt (1) designed as a continuous band, which is formed as a stainless steel belt and is driven in the conveying direction of the belt conveyor around a front shaft (2) disposed at the front and in the running direction of the belt conveyor around a rear shaft (3) disposed at the back, whereby driving of the belt (1) is carried out by means of a shaft (3) around which the belt (1) is partially wrapped, and whereby the diameter of at least one of the shafts (2, 3) is between twenty and one hundred and twenty millimetres,
whereby
the thickness of the belt (1) is less than 0.6 millimetres.

2. Belt conveyor according to claim 1,
**characterised in that**
the belt (1) comprises a metal band, the ends of which are joined together so as to overlap.

3. Belt conveyor according to claim 2,
**characterised in that**
the ends are joined together by spot welding.

4. Belt conveyor according to claim 2 or 3,
**characterised in that**
the joining line of the ends of the belt (1) forms an angle to the longitudinal axis of the belt (1) which is smaller than 90 degrees, preferably smaller than 45 degrees, especially smaller than 35 degrees.

5. Belt conveyor according to one of claims 1 to 4,
**characterised in that**
driving of the belt is performed by means of the rear shaft (3).

## Revendications

1. Convoyeur à bande, avec une bande conçue comme bande sans fin (1), laquelle est conçue comme bande en acier spécial et est renvoyée autour d'un arbre avant (2) disposé à l'avant en direction de convoyage du convoyeur à bande et autour d'un arbre arrière (3) disposé à l'arrière en direction de fonctionnement du convoyeur à bande, sachant que l'entraînement pour la bande (1) est effectué au moyen d'un arbre (3) entouré partiellement par la bande et que le diamètre d'au moins un des arbres (2, 3) se situe entre vingt et cent vingt millimètres, sachant que l'épaisseur de la bande (1) est inférieure à 0,6 millimètre.

2. Convoyeur à bande selon la revendication 1,
**caractérisé en ce**
**que** la bande (1) se compose d'une bande métallique, dont les extrémités sont reliées ensemble en se chevauchant.

3. Convoyeur à bande selon la revendication 2,
**caractérisé en ce**
**que** les extrémités sont reliées ensemble par une soudure par points.

4. Convoyeur à bande selon la revendication 2 ou 3,
**caractérisé en ce**
**que** la ligne d'assemblage des extrémités de la bande (1) forme avec l'axe longitudinal de la bande (1) un angle, qui est inférieur à 90 degrés, de préférence inférieur à 45 degrés, en particulier inférieur à 35 degrés.

5. Convoyeur à bande selon l'une quelconque des revendications 1 à 4,
**caractérisé en ce**
**que** l'entraînement de la bande s'effectue au moyen de l'arbre arrière (3).
